# EUROPÄISCHE PATENTSCHRIFT

(11) **EP 0 804 970 B1**
(45) Veröffentlichungstag und Bekanntmachung des Hinweises auf die Patenterteilung: **04.09.2002**
(21) Anmeldenummer: 97104296.5
(22) Anmeldetag: 13.03.1997
(51) Int. Cl.: B05B 15/06, B08B 3/02, B05B 9/01

(54) **Handspritzpistole für ein Hochdruckreinigungsgerät**
Hand held spray gun for high pressure cleaning apparatus
Pistolet de pulvérisation à main pour appareil de nettoyage haute pression

(30) Priorität: 01.05.1996 DE 19617417
(43) Veröffentlichungstag der Anmeldung: 05.11.1997
(73) Patentinhaber: Alfred Kärcher GmbH & Co., 71364 Winnenden (DE)
(72) Erfinder: Schmidgall, Thomas, 71549 Auenwald (DE); Klein, Peter, 71364 Winnenden (DE)
(74) Vertreter: Böhme, Ulrich, Dr. Dipl.-Phys.

(56) Entgegenhaltungen:
- EP-A- 0 444 523
- EP-A- 0 730 911
- DE-A- 2 426 042
- DE-A- 3 236 913
- FR-A- 2 658 435
- PATENT ABSTRACTS OF JAPAN vol. 96, no. 8, 30.August 1996 & JP 08 093018 A (KITAMURA), 9.April 1996,

## Beschreibung

Die Erfindung betrifft eine Handspritzpistole für ein Hochdruckreinigungsgerät mit einem Gehäuse, in das eine Flüssigkeitsleitung einmündet, die im Gehäuse um ihre Längsachse drehbar gelagert ist, wobei die Flüssigkeitsleitung ein um seine Längsachse drehbar am Gehäuse gelagertes Rohrstück umfaßt, welches an seinem freien Ende ein Verbindungsteil aufweist, mit welchem ein dazu passendes Verbindungsteil einer Schlauchleitung durch gegenseitiges Verdrehen der Schlauchleitung und des Rohrstückes lösbar verbindbar ist.

Derartige Handspritzpistolen dienen bei Hochdruckreinigern der Verbindung einer von einem Hochdruckreinigungsgerät kommenden Flüssigkeitsleitung, die üblicherweise in Form eines Hochdruckschlauches ausgebildet ist, und eines Abgabewerkzeuges, beispielsweise eines Strahlrohres. Außerdem befinden sich in der Handspritzpistole normalerweise Schließmittel, mit denen der Flüssigkeitsstrom unterbrochen oder in seiner Stärke geregelt werden kann.

Für die Handhabung notwendig ist es, daß die Handspritzpistole gegenüber dem angeschlossenen Hochdruckschlauch verdrehbar ist, um auf diese Weise Verspannungen zu vermeiden.

Es ist dazu bekannt, Hochdruckschläuche im Inneren einer Handspritzpistole um ihre Längsachse drehbar zu lagern (DE 34 07 744 C2). Diese bekannte Konstruktion setzt jedoch voraus, daß zur Herstellung einer Verbindung das Gehäuse der Handspritzpistole geöffnet wird.

Bei einer anderen bekannten Handspritzpistole ist vorgesehen, daß ein Hochdruckschlauch an ein in der Handspritzpistole gelagertes Rohrstück über eine Kupplung angeschlossen werden kann, die eine Relativverdrehung zwischen dem Rohrstück und dem Hochdruckschlauch ermöglicht (DE 33 00 290 A1).

Bei dieser Konstruktion liegt die Drehverbindung außerhalb der Handspritzpistole und ist daher im harten Betrieb eines Hochdruckreinigungsgerätes gefährdet, in diesem Bereich können Beschädigungen auftreten.

Aus der DE 32 36 913 A1 (vgl. Oberbegriff des Anspruchs 1) ist eine ähnliche Handspritzpistole mit verdrehbarem Druckschlauch bekannt, auch bei dieser Pistole ist es notwendig, das Gehäuse zu öffnen, um die Verbindung der drehbaren Teile der Schlauchverbindung im Inneren des Gehäuses gegenüber der Flüssigkeitsleitung zu lösen.

Es ist Aufgabe der Erfindung, eine Handspritzpistole der gattungsgemäßen Art so auszubilden, daß einerseits eine Drehverbindung zwischen Flüssigkeitsleitung und Handspritzpistole im Inneren der Handspritzpistole angeordnet ist und daß andererseits eine Verbindung eines Hochdruckschlauches mit der Handspritzpistole möglich wird, ohne das Gehäuse der Handspritzpistole öffnen zu müssen.

Diese Aufgabe wird bei einer Handspritzpistole der eingangs beschriebenen Art erfindungsgemäß dadurch gelöst, daß zwischen Gehäuse und Rohrstück wirksame Drehsicherungsmittel vorgesehen sind, die wahlweise das Rohrstück im Gehäuse gegen eine Drehung um seine Längsachse sichern oder freigeben.

Bei dieser Konstruktion wird eine Drehverbindung zwischen einem Rohrstück und der Handspritzpistole im Innern des Gehäuses vorgesehen, und die anzuschließende Schlauchleitung wird mit diesem Rohrstück verbunden. Diese Verbindung erfolgt dabei durch eine gegenseitige Verdrehung des Rohrstückes und der Schlauchleitung. Um diese gegenseitige Verdrehung zu ermöglichen, sind Drehsicherungsmittel vorgesehen, die das Rohrstück gegen eine Drehung im Gehäuse sichern. Das Verbindungsteil des Rohrstückes ist in diesem drehgesicherten Zustand praktisch fest mit der Handspritzpistole verbunden, so daß die Herstellung der Verbindung zur Schlauchleitung durch eine relative Drehbewegung ohne weiteres erfolgen kann. Eine ähnliche Konstruktion ist im übrigen aus der EP 0 730 911 A1 bekannt, allerdings handelt es sich dabei um eine Handbrause, wie sie im Sanitärbereich eingesetzt wird, und nicht um eine Handspritzpistole für ein Hochdruckreinigungsgerät.

Vorteilhaft ist es, wenn das Verbindungsteil des Rohrstückes außerhalb des Gehäuses angeordnet ist, so daß die Verbindung zwischen Schlauchleitung und Rohrstück außerhalb des Gehäuses problemlos hergestellt werden kann.

Gemäß einer bevorzugten Ausführungsform ist das Verbindungsteil des Rohrstückes ein Gewinde, so daß die Verbindung zwischen Rohrstück und Schlauchleitung durch eine Verschraubung herstellbar ist.

Grundsätzlich wären aber auch andere Drehverbindungen möglich, beispielsweise eine Bajonettverbindung.

Eine besonders günstige Ausgestaltung ergibt sich, wenn das Rohrstück als in das Gehäuse einsteckbares und in der eingesteckten Position mit einem anschließenden Leitungselement der Flüssigkeitsleitung eine abgedichtete, um die Längsachse des Rohrstückes frei drehbare Verbindung eingehendes und in axialer Richtung fixierbares Bauteil ausgebildet ist.

Ein solches Rohrstück kann also als separates Bauteil in die Handspritzpistole eingeschoben werden und dient dann als Adapter oder Anschlußteil für eine flexible Schlauchleitung, die beispielsweise einen Schraubanschluß trägt. Auf diese Weise kann durch Verwendung unterschiedlicher Rohrstücke eine Verbindungsmöglichkeit für Schlauchleitungen mit unterschiedlichen Anschlüssen zur Verfügung gestellt werden.

Es ist dabei vorteilhaft, wenn die Verbindung durch das Einschieben eines Nippels in eine Hülse herstellbar ist.

Bei einer bevorzugten Ausführungsform kann dabei vorgesehen werden, daß die axiale Fixierung des Rohrstückes durch einen am Gehäuse verschieblichen Anschlag erfolgt, der in einer Stellung einen Vorsprung am Rohrstück hintergreift und ihn in einer anderen Stellung freigibt. Damit ist es allein durch Verschieben des Anschlages möglich, das Rohrstück vom Gehäuse zu lösen und aus diesem herauszuziehen, wenn das Einsetzen eines anderen Rohrstück erwünscht ist.

Insbesondere kann der Anschlag ein U-förmiger Bügel sein, der quer zur Längsrichtung des Rohrstückes verschieblich am Gehäuse gelagert ist und der im eingeschobenen Zustand das Rohrstück zwischen seinen Armen aufnimmt. Der Vorsprung kann durch eine Ringschulter am Rohrstück gebildet werden, bei einer bevorzugten Ausführungsform liegt an der Ringschulter ein Wälzlager an, an dem der einschiebbare Anschlag anliegt. Dadurch wird die gegenseitige Verdrehung des Rohrstückes und des Gehäuses erleichtert.

Eine Handspritzpistole mit einem in der beschriebenen Weise einsetzbaren Rohrstück kann auch ohne bauliche Veränderungen dazu dienen, eine flexible Schlauchleitung unmittelbar ohne Zwischenschaltung eines Rohrstükkes aufzunehmen, wenn diese Schlauchleitung an ihrem Ende entsprechende Anschlußmittel trägt, nämlich Anschlußmittel, die eine dichtende Verbindung und eine freie Verdrehbarkeit ermöglichen. Zum Beispiel könnte eine Schlauchleitung Verwendung finden, die einen Nippel trägt, der in eine Hülse des anschließenden Leitungsstückes einschiebbar ist, und die weiterhin einen Vorsprung trägt, an dem der im Gehäuse verschiebliche Anschlag anliegen kann.

Eine in dieser Weise aufgebaute Handspritzpistole dient also entweder der unmittelbaren Aufnahme einer entsprechend angepaßten flexiblen Schlauchleitung oder kann durch Einsatz eines Rohrstückes mit einem außerhalb des Gehäuses liegenden Verbindungsteil versehen werden, das an unterschiedliche Anschlüsse der verwendeten Schlauchleitungen angepaßt ist.

Die Drehsicherungsmittel, die das Rohrstück im Gehäuse gegen eine Drehung um seine Längsachse sichern, um dadurch die Herstellung der Drehverbindung zwischen Rohrstück und Schlauchleitung zu ermöglichen, kann sehr unterschiedlich ausgebildet sein. Es kann sich beispielsweise um Klemmittel handeln, die durch einen Reibschluß zwischen Rohrstück und Gehäuse die freie Verdrehbarkeit verhindern. Eine solche Verklemmung könnte beispielsweise durch verschiebbar am Gehäuse gelagerte Bremselemente erzielt werden, die an das Rohrstück andrückbar sind, oder durch ein Zusammendrücken des Gehäuses, das im zusammengedrückten Zustand reibend am Rohrstück anliegt.

Gemäß einer besonders bevorzugten Ausführungsform umfassen die Drehsicherungsmittel ein verschiebbares Riegelelement, das in der gegen eine Drehung sichernden Stellung einen Formschluß zwischen Rohrstück und Gehäuse herstellt.

Günstig ist es, wenn zur Herstellung des Formschlusses im obersten Randbereich des Riegelelementes Rücksprünge gegenüber der zylindrischen Außenwand vorgesehen sind, in die Vorsprünge an der Innenwand des Gehäuses eintauchen. Es kann sich dabei insbesondere um Verstärkungsrippen an der Innenwand des Gehäuses handeln. Dieser Formschluß wird also allein durch eine entsprechende Ausgestaltung des Riegelelementes hervorgerufen, das so ausgebildet ist, daß bereits zur Verstärkung vorgesehene Rippen als Vorsprünge dienen, die in die Rücksprünge des Riegelements eingreifen und dadurch eine Verdrehung verhindern.

Dabei kann vorgesehen sein, daß das Riegelelement am Rohrstück verschieblich gelagert ist. Das Rohrstück bildet in diesem Falle ein selbständiges Bauteil, das auch dieses Riegelelement trägt, so daß am Gehäuse selber keine besonderen baulichen Veränderungen notwendig sind.

Gemäß einer besonders bevorzugten Ausführungsform ist vorgesehen, daß das Riegelelement eine auf dem Rohrstück längsverschieblich und drehfest gelagerte Hülse ist, die in der gegen Verdrehung sichernden Stellung mit einer unrunden Außenfläche in eine komplementäre Öffnung des Gehäuses eintaucht.

Dabei kann die unrunde Außenfläche und die komplementäre Öffnung des Gehäuses vorzugsweise die Form eines Mehrkantes aufweisen, insbesondere die eines Sechskantes. Diese unrunde Außenfläche, die insbesondere die Form eines Sechskantes haben kann, kann zusätzlich zu der Drehsicherung vorgesehen sein, die sich durch den Eingriff von Vorsprüngen des Gehäuses in Rücksprünge des Riegelelementes ergibt. Dadurch ergibt sich eine besonders wirksame Drehsicherung auch in dem Fall, in dem ein Gehäuse aus Kunststoff verwendet wird, das aufgrund der Eigenelastizität möglicherweise geringe Verformungen erfährt.

Insgesamt ergibt sich so eine konstruktiv besonders einfache Lösung, um zum Zwecke der Verbindung des Rohrstückes und der Schlauchleitung eine Drehsicherung des Rohrstückes vorzunehmen, es genügt nämlich, die Hülse so in die Öffnung des Gehäuses einzuschieben, daß ein Formschluß hergestellt wird.

Dabei ist weiterhin vorteilhaft, wenn die komplementäre Öffnung des Gehäuses einen Durchmesser aufweist, der das Einschieben des Rohrstückes in das Gehäuse ermöglicht. Dadurch ist sichergestellt, daß das Rohrstück ausgewechselt werden kann.

Bei einer speziellen Konstruktion kann vorgesehen sein, daß das Verbindungsteil am Rohrstück durch ein auf das Rohrstückende aufgeschobenes zylindrischen Anschlußstück gebildet wird, das ein Anschlußgewinde trägt und auf dem die Hülse längsverschieblich gelagert ist. Dieses Anschlußstück übernimmt also eine Doppelfunktion, einmal zur Herstellung der Verbindung mit der Schlauchleitung und zum anderen im Hinblick auf die Lagerung der verschiebbaren Hülse der Drehsicherung.

Die Drehsicherung zwischen der Hülse und dem Rohrstück oder dem Anschlußstück kann durch einen unrunden Querschnitt des Rohrstückes oder des Anschlußstückes und eine komplementäre Innenfläche der Hülse erreicht werden, insbesondere kann der Querschnitt des Rohrstückes oder des Anschlußstückes die Form eines Mehrkants haben.

Es ist weiterhin günstig, wenn die Hülse auf ihrer Außenseite eine Griffprofilierung aufweist, beispielsweise in Form einiger umlaufender Umfangsrippen.

Gemäß einer bevorzugten Ausführungsform kann das Rohrstück in einem dieses im Abstand umgebenden rohrförmigen Abschnitt des Gehäuses angeordnet sein, dieser Abschnitt mündet dann in den übrigen Teil des Gehäuses ein, in dem Schließventile und Anschlüsse für Strahlrohre etc. angeordnet sind.

Die nachfolgende Beschreibung bevorzugter Ausführungsformen der Erfindung dient im Zusammenhang mit der Zeichnung der näheren Erläuterung. Es zeigen:

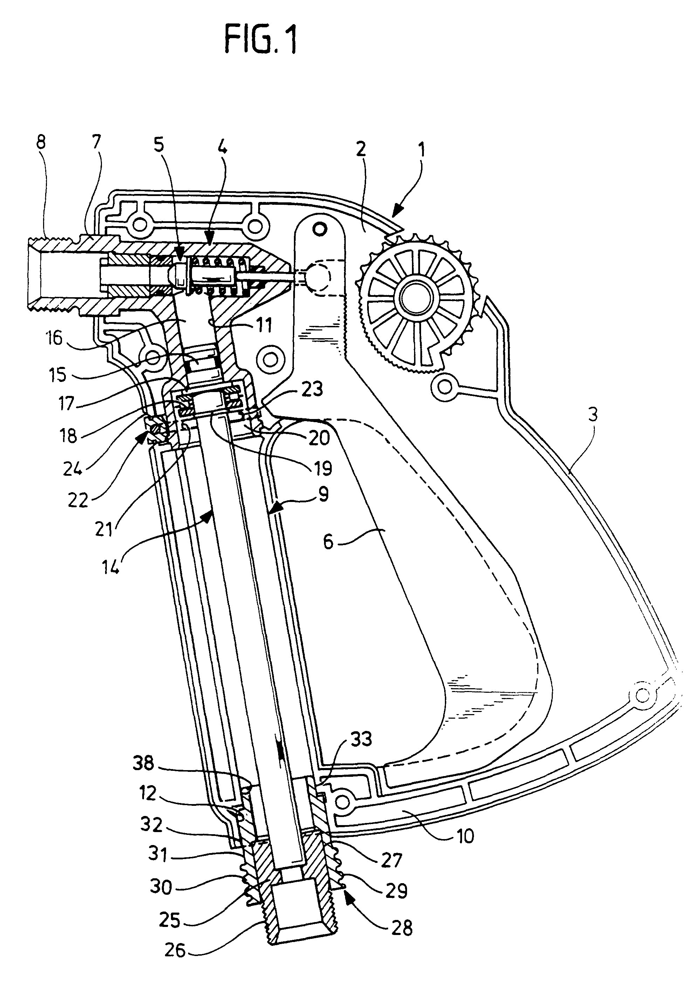

- Figur 1:: eine Längsschnittansicht durch eine Handspritzpistole mit einem um seine Längsachse drehbaren Rohrstück;

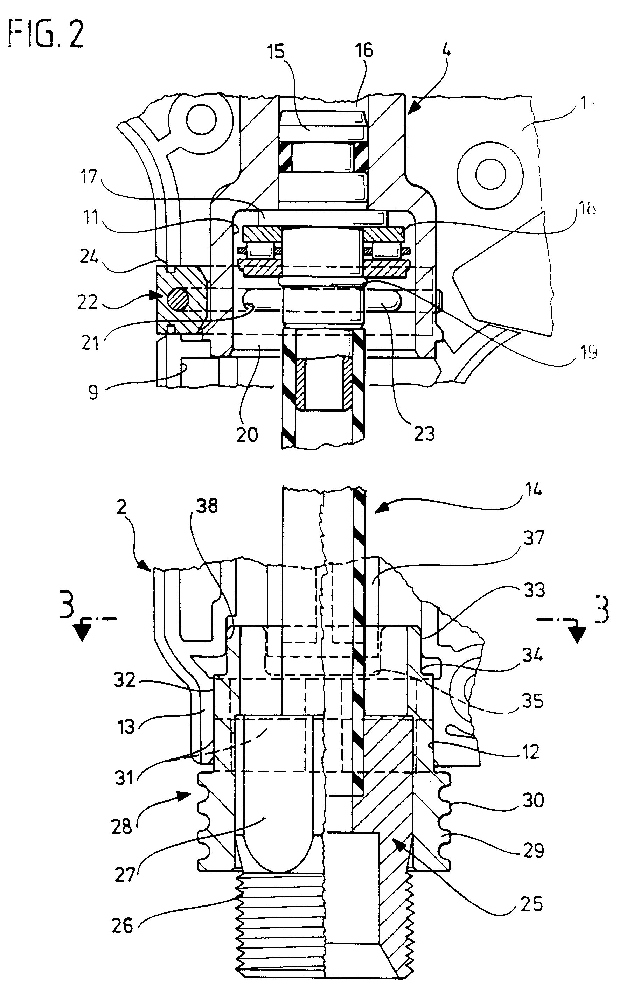

- Figur 2:: eine vergrößerte Längsschnittansicht im oberen und im unteren Endbereich des Rohrstückes;
- Figur 3:: eine Schnittansicht längs Linie 3-3 in Figur 2 und
- Figur 4:: eine Draufsicht auf ein hülsenförmiges Riegelelement.

Die in der Zeichnung dargestellte Handspritzpistole 1 umfaßt ein Gehäuse aus zwei im wesentlichen spiegelsymmetrisch ausgebildeten Halbschalen 2. Das Gehäuse nimmt in einem oberen Teil eine zentrale Baueinheit 4 mit einem Schließventil 5 auf, welches über einen Handgriff 6 betätigbar ist. Dieser Handgriff 6, der schwenkbar am Gehäuse gelagert ist, verläuft längs eines Griffbereiches 3 des Gehäuses.

An die Baueinheit 4 sind ausströmseitig Leitungsmittel anschließbar, beispielsweise eine in der Zeichnung nicht dargestellte Sprühlanze, dazu weist die Baueinheit 4 ein Anschlußstück 7 mit einem Außengewinde 8 auf.

Im wesentlichen parallel zum Griffbereich 3 verläuft ein im wesentlichen rohrförmiger Abschnitt 9 des Gehäuses, der an seinem unteren Ende über einen Steg 10 mit dem unteren Ende des Griffbereiches 3 verbunden ist. In diesen rohrförmigen Abschnitt 9 mündet an seinem oberen Ende die zentrale Baueinheit 4 ein mit einer sich stufenförmig verengenden, zum Schließventil 5 führenden Bohrung 11.

Am unteren Ende steht der rohrförmige Abschnitt 9 des Gehäuses über eine Öffnung 12 mit dem Außenraum in Verbindung, diese Öffnung 12 wird seitlich durch parallel zur Längsachse des rohrförmigen Abschnittes 9 verlaufende Wände 13 begrenzt und weist den Querschnitt eines regelmäßigen Sechsecks auf.

In den rohrförmigen Abschnitt 9 ist durch die Öffnung 12 hindurch ein Rohrstück 14 eingeschoben, das an seinem eingeschobenen Ende einen Nippel 15 trägt, der abgedichtet in den Abschnitt 16 der Bohrung 11 mit kleinerem Durchmesser eintaucht.

An den Nippel 15 schließt sich eine radial abstehende Ringschulter 17 an, an der auf der dem Nippel gegenüberliegenden Seite ein das Rohrstück 14 umgebendes Wälzlager 18 anliegt. Dies kann in axialer Richtung zwischen der Ringschulter 17 und einer weiteren Ringschulter 19 festgelegt sein. Die Ringschultern 17 und 19 und das dazwischen angeordnete Wälzlager 18 tauchen in den Abschnitt 20 der Bohrung 11 mit größerem Durchmesser ein.

In diesem Abschnitt 20 ist in zwei parallelen, quer zur Längsachse der Bohrung 11 verlaufenden Bohrungen oder Einschnitten 21 ein U-förmiger Bügel 22 verschieblich geführt, dessen Arme 23 bei eingeschobenem Bügel 22 das Rohrstück 14 zwischen sich aufnehmen und dadurch als Anschlag für das Wälzlager 18 dienen. Dadurch ergibt sich eine axiale Festlegung des Rohrstückes 14 relativ zu der zentralen Baueinheit 4. Der Bügel 22 kann durch eine Öffnung 24 im Gehäuse herausgezogen werden, und dann ist es ohne weiteres möglich, das Rohrstück 14 aus der Bohrung 11 und aus dem rohrförmigen Abschnitt 9 herauszuziehen. Die Öffnung 12 ist dabei so groß gewählt, daß das Rohrstück 14 mit der Ringschulter 17 und dem Wälzlager 18 durch die Öffnung 12 hindurchpaßt.

Die beschriebene Lagerung führt zu einer lösbaren Festlegung des Rohrstückes 14 in der zentralen Baueinheit 4, bei der eine abgedichtete Verbindung besteht, wobei das Rohrstück 14 in axialer Richtung festgelegt ist und um seine Längsachse frei verdrehbar bleibt.

An dem dem Nippel 15 gegenüberliegenden freien Ende des Rohrstückes 14, das aus dem rohrförmigen Abschnitt 9 des Gehäuses hervorsteht, trägt das Rohrstück 14 ein zylindrisches Anschlußstück 25 mit größerem Außendurchmesser, das an seinem unteren Ende ein Außengewinde 26 aufweist, auf welches eine in der Zeichnung nicht dargestellte flexible Schlauchleitung aufschraubbar ist.

An das Außengewinde 26 schließt sich zum Gehäuse hin ein sechseckiger Mehrkantbereich 27 an, auf dem eine Hülse 28 längsverschieblich gelagert ist. Diese Hülse 28 umgibt den Mehrkantbereich 27 dicht, so daß die Hülse 28 gegenüber dem Mehrkantbereich 27 drehfest gelagert ist.

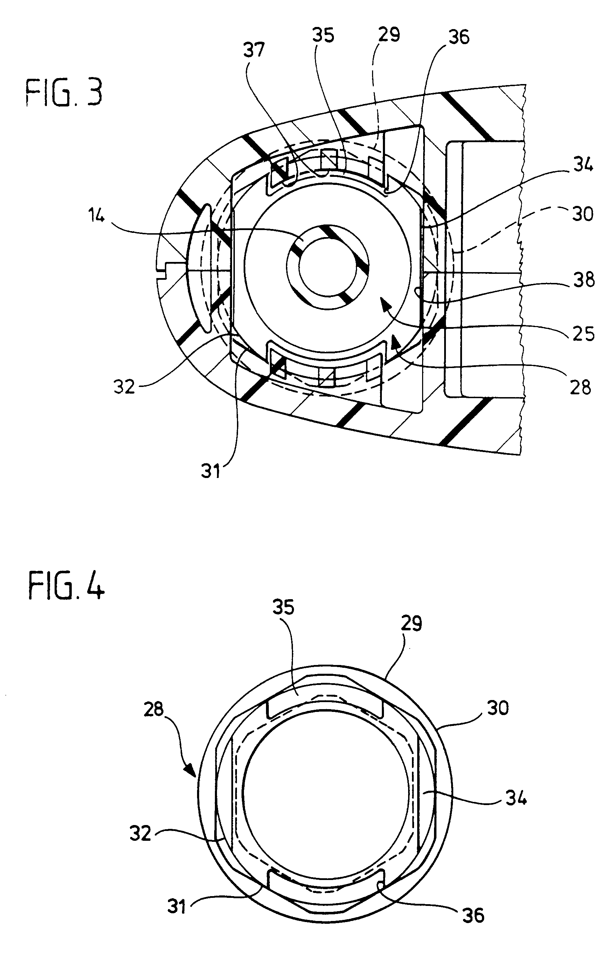

Die Außenfläche der Hülse 28 ist in vier Abschnitte unterteilt, nämlich einen gehäusefernen Griffbereich 29 mit in Umfangsrichtung umlaufenden Rippen 30, einen daran anschließenden Mehrkantbereich 31, der komplementär und genau passend zum Querschnitt der Öffnung 12 des Gehäuses ausgebildet ist, einen daran anschließenden, gehäusenahen kreiszylindrischen Bereich 32, dessen Außendurchmesser so gewählt ist, daß er beim Eintreten in die Öffnung 12 in dieser frei verdrehbar ist, und einen Rücksprungbereich 33, in dem gegenüber dem kreiszylindrischen Bereich 32 radial zurückspringende Rücksprünge 34, 35 vorgesehen sind (Figur 4). Die Rücksprünge 34 sind dabei durch seitliche Abflachungen entstanden, die Rücksprünge 35 durch einen im wesentlichen konzentrischen Einstich mit seitlichen Begrenzungswänden 36.

Die Hülse 28 kann auf dem Anschlußstück 25 zwischen einer gehäusefernen und einer gehäusenahen Stellung verschoben werden. In der gehäusefernen Stellung taucht der Bereich 32 in die Öffnung 12 ein, das Rohrstück ist dadurch im Gehäuse der Handspritzpistole 1 frei verdrehbar, trotzdem verschließt die Hülse 28 die Öffnung 12 nach außen.

In der gehäusenahen Stellung der Hülse 28 taucht der Mehrkantbereich 31 in die Öffnung 12 ein und stellt dadurch eine drehfeste Verbindung zwischen dem Gehäuse der Handspritzpistole 1 und der Hülse 28 her. In der gehäusenahen Stellung ist die Hülse 28 weiterhin so positioniert, daß an der Innenwand der Halbschalen 2 angeordnete und in den Innenraum vorstehende Verstärkungsrippen 37 in die Rücksprünge 35 eingreifen, während Querwände 38 der Halbschalen 2 in die Rücksprünge 34 eingreifen (Figur 3). Auch dadurch ergibt sich eine Drehsicherung zwischen Hülse 28 und Gehäuse, die zusätzlich zu der Drehsicherung durch den Eingriff des Mehrkantbereiches 31 in die Öffnung 12 eine sichere Drehfixierung gewährleistet.

Da die Hülse 28 ihrerseits auf dem Mehrkantbereich 27 des Anschlußstückes 25 drehfest gehalten ist, ergibt sich dadurch eine Drehverriegelung des Rohrstückes 14 gegenüber dem Gehäuse der Handspritzpistole 1. In dieser drehverriegelten Stellung der Hülse 28 kann auf das Anschlußstück 25 eine flexible Schlauchleitung aufgeschraubt werden, ohne daß das Außengewinde 26 des Anschlußstückes 25 irgendwie zusätzlich fixiert werden müßte. Sobald die Verbindung hergestellt ist, kann die Hülse 28 wieder in die gehäuseferne Stellung verschoben werden, so daß die freie Drehbarkeit zwischen Rohrstück 14 und Handspritzpistole 1 wieder hergestellt wird.

Selbstverständlich kann die Hülse 28 auch zur Drehsicherung verwendet werden, wenn der Benutzer die Drehbarkeit der Handspritzpistole 1 gegenüber dem Rohrstück 14 und der daran angeschlossenen Schlauchleitung aus anderen Gründen vermeiden will, diese Hülse 28 gibt also die Möglichkeit, wahlweise die Drehsicherung einzuschalten oder auszuschalten.

## Patentansprüche

1. Handspritzpistole (1) für ein Hochdruckreinigungsgerät mit einem Gehäuse (2), in das eine Flüssigkeitsleitung einmündet, die im Gehäuse (2) um ihre Längsachse drehbar gelagert ist, wobei die Flüssigkeitsleitung ein um seine Längsachse drehbar am Gehäuse (2) gelagertes Rohrstück (14) umfaßt, welches an seinem freien Ende ein Verbindungsteil (25) aufweist, mit welchem ein dazu passendes Verbindungsteil einer Schlauchleitung durch gegenseitiges Verdrehen der Schlauchleitung und des Rohrstückes (14) lösbar verbindbar ist, **dadurch gekennzeichnet, daß** zwischen Gehäuse (2) und Rohrstück (14) wirksame Drehsicherungsmittel (12; 28) vorgesehen sind, die wahlweise das Rohrstück (14) im Gehäuse (2) gegen eine Drehung um seine Längsachse sichern oder freigeben.

2. Handspritzpistole nach Anspruch 1, **dadurch gekennzeichnet, daß** das Verbindungsteil (25) des Rohrstückes (14) außerhalb des Gehäuses (2) angeordnet ist.

3. Handspritzpistole nach Anspruch 1 oder 2, **dadurch gekennzeichnet, daß** das Verbindungsteil des Rohrstückes (14) ein Gewinde (26) ist.

4. Handspritzpistole nach einem der voranstehenden Ansprüche, **dadurch gekennzeichnet, daß** das Rohrstück (14) als in das Gehäuse (2) einsteckbares und in der eingesteckten Position mit einem anschließenden Leitungselement (4) der Flüssigkeitsleitung eine abgedichtete, um die Längsachse des Rohrstückes (14) frei drehbare Verbindung eingehendes und in axialer Richtung fixierbares Bauteil ausgebildet ist.

5. Handspritzpistole nach Anspruch 4, **dadurch gekennzeichnet, daß** die Verbindung durch das Einschieben eines Nippels (15) in eine Hülse (11, 16) herstellbar ist.

6. Handspritzpistole nach einem der Ansprüche 4 oder 5, **dadurch gekennzeichnet, daß** die axiale Fixierung des Rohrstückes (14) durch einen am Gehäuse (2) verschieblichen Anschlag (22, 23) erfolgt, der in einer Stellung einen Vorsprung (17, 18) am Rohrstück (14) hintergreift und ihn in einer anderen Stellung freigibt.

7. Handspritzpistole nach Anspruch 6, **dadurch gekennzeichnet, daß** der Anschlag ein U-förmiger Bügel (22) ist, der quer zur Längsrichtung des Rohrstükkes (14) verschieblich am Gehäuse (2) gelagert ist und der im eingeschobenen Zustand das Rohrstück (14) zwischen seinen Armen (23) aufnimmt.

8. Handspritzpistole nach Anspruch 6 oder 7, **dadurch gekennzeichnet, daß** der Vorsprung durch eine Ringschulter (17) am Rohrstück (14) gebildet wird.

9. Handspritzpistole nach Anspruch 8, **dadurch gekennzeichnet, daß** an der Ringschulter (17) ein Wälzlager (18) anliegt, an dem der einschiebbare Anschlag (22, 23) anliegt.

10. Handspritzpistole nach einem der voranstehenden Ansprüche, **dadurch gekennzeichnet, daß** die Drehsicherungsmittel ein verschiebbares Riegelelement (28) umfassen, das in der gegen eine Drehung sichernden Stellung einen Formschluß zwischen Rohrstück (14) und Gehäuse (2) herstellt.

11. Handspritzpistole nach Anspruch 10, **dadurch gekennzeichnet, daß** das Riegelelement (28) am Rohrstück (14) verschieblich gelagert ist.

12. Handspritzpistole nach Anspruch 11, **dadurch gekennzeichnet, daß** das Riegelelement eine auf dem Rohrstück (14) längsverschieblich und drehfest gelagerte Hülse (28) ist, die in der gegen Verdrehung sichernden Stellung mit einer unrunden Außenfläche (31) in eine komplementäre Öffnung (12) des Gehäuses (2) eintaucht.

13. Handspritzpistole nach Anspruch 12, **dadurch gekennzeichnet, daß** die unrunde Außenfläche (31) und die komplementäre Öffnung (12) des Gehäuses (2) die Form eines Mehrkantes aufweisen.

14. Handspritzpistole nach Anspruch 12 oder 13, **dadurch gekennzeichnet, daß** die komplementäre Öffnung (12) des Gehäuses (2) einen Durchmesser aufweist, der das Einschieben des Rohrstückes (14) in das Gehäuse (2) ermöglicht.

15. Handspritzpistole nach einem der Ansprüche 10 bis 14, **dadurch gekennzeichnet, daß** zur Herstellung des Formschlusses im obersten Randbereich (33) des Riegelelements (28) Rücksprünge (34, 35) gegenüber der zylindrischen Außenwand (32) vorgesehen sind, in die Vorsprünge (37, 38) an der Innenwand des Gehäuses (2) eintauchen.

16. Handspritzpistole nach Anspruch 15, **dadurch gekennzeichnet, daß** die Vorsprünge (37) durch Verstärkungsrippen an der Innenwand des Gehäuses (2) gebildet werden.

17. Handspritzpistole nach einem der Ansprüche 12 bis 16, **dadurch gekennzeichnet, daß** das Verbindungsteil am Rohrstück (14) durch ein auf das Rohrstückende aufgeschobenes, zylindrisches Anschlußstück (25) gebildet wird, das ein Anschlußgewinde (26) trägt und auf dem die Hülse (28) längsverschieblich gelagert ist.

18. Handspritzpistole nach einem der Ansprüche 12 bis 17, **dadurch gekennzeichnet, daß** die Hülse (28) in der die Verdrehung freigebenden Stellung mit einem Teil ihrer Außenfläche (32) in die Öffnung (12) des Gehäuses (2) eintaucht, der in der Öffnung frei drehbar ist.

19. Handspritzpistole nach einem der Ansprüche 12 bis 18, **dadurch gekennzeichnet, daß** die Drehsicherung zwischen Hülse (28) und Rohrstück (14) oder Anschlußstück (25) durch einen unrunden Querschnitt des Rohrstückes oder des Anschlußstückes (25) und eine komplementäre Innenfläche der Hülse (28) erreicht wird.

20. Handspritzpistole nach Anspruch 19, **dadurch gekennzeichnet, daß** der Querschnitt des Rohrstückes oder des Anschlußstückes (25) die Form eines Mehrkants hat.

21. Handspritzpistole nach einem der Ansprüche 12 bis 20, **dadurch gekennzeichnet, daß** die Hülse (28) auf ihrer Außenseite eine Griffprofilierung (29, 30) aufweist.

22. Handspritzpistole nach einem der voranstehenden Ansprüche, **dadurch gekennzeichnet, daß** das Rohrstück (14) in einem dieses im Abstand umgebenden rohrförmigen Abschnitt (9) des Gehäuses (2) angeordnet ist.

## Claims

1. A hand-held spray gun (1) for a high-pressure cleaning appliance, having a housing (2) into which there opens a fluid line mounted in the housing (2) so as to be rotatable about its longitudinal axis, wherein the fluid line comprises a pipe section (14) which is mounted on the housing (2) so as to be rotatable about its longitudinal axis and the free end of which has a connecting part (25) to which a connecting part, of a hose line, adapted thereto can be detachably connected by mutual rotation of the hose line and the pipe section (14), **characterised in that** means (12; 28) to prevent rotation, effective between the housing (2) and the pipe section (14), are provided and in the housing (2) secure the pipe section (14) against rotation about its longitudinal axis or release it alternatively.

2. A hand-held spray gun according to Claim 1, **characterised in that** the connecting part (25) of the pipe section (14) is arranged exterior to the housing (2).

3. A hand-held spray gun according to Claim 1 or 2, **characterised in that** the connecting part of the pipe section (14) is a thread (26).

4. A hand-held spray gun according to any one of the preceding Claims, **characterised in that** the pipe section (14) is in the form of a structural part which can be inserted into the housing (2) and in the inserted position enters into a sealed connection, freely rotatable about the longitudinal axis of the pipe section (14), with an adjacent line element (4) of the fluid line and which can be secured in the axial direction.

5. A hand-held spray gun according to Claim 4, **characterised in that** the connection can be produced by pushing a fitting (15) into a sleeve (11, 16).

6. A hand-held spray gun according to either one of Claims 4 or 5, **characterised in that** the axial securing of the pipe section (14) takes place by a stop (22, 23) which is displaceable on the housing (2) and which engages behind a projection (17, 18) on the pipe section (14) in one position and releases the projection (17, 18) in another position.

7. A hand-held spray gun according to Claim 6, **characterised in that** the stop is a U-shaped clip (22) which is mounted on the housing (2) so as to be displaceable transversely to the longitudinal direction of the pipe section (14) and which receives the pipe section (14) between its limbs in the pushed-in state.

8. A hand-held spray gun according to Claim 6 or 7, **characterised in that** the projection is formed by an annular shoulder (17) on the pipe section (14).

9. A hand-held spray gun according to Claim 8, **characterised in that** a rolling bearing (18) contacts the annular shoulder (17) and the insertable stop (22, 23) rests against the rolling bearing (18).

10. A hand-held spray gun according to any one of the preceding Claims, **characterised in that** the means to prevent rotation comprise a displaceable locking element (28) which in its position to prevent rotation produces a positive connection between the pipe section (14) and the housing (2).

11. A hand-held spray gun according to Claim 10, **characterised in that** the locking element (28) is displaceably mounted on the pipe section (14).

12. A hand-held spray gun according to Claim 11, **characterised in that** the locking element is a sleeve (28) which is mounted on the pipe section (14) in a longitudinally-displaceable and rotationally-fixed manner and which in the position to prevent rotation projects by means of a non-circular outer surface (31) into a complementary opening (12) in the housing (2).

13. A hand-held spray gun according to Claim 12, **characterised in that** the non-circular outer surface (31) and the complementary opening (12) in the housing (2) have the form of a polygon.

14. A hand-held spray gun according to Claim 12 or 13, **characterised in that** the complementary opening (12) in the housing (2) has a diameter enabling the pipe section (14) to be pushed into the housing (2).

15. A hand-held spray gun according to any one of Claims 10 to 14, **characterised in that** in order to produce the positive connection, the uppermost peripheral region (33) of the locking element (28) is provided with offsets (34, 35) with respect to the cylindrical outer wall (32), projections (37, 38) on the inner wall of the housing (2) projecting into these offsets.

16. A hand-held spray gun according to Claim 15, **characterised in that** the projections (37) are formed by reinforcing ribs on the inside wall of the housing (2).

17. A hand-held spray gun according to any one of Claims 12 to 16, **characterised in that** the connecting part on the pipe section (14) is formed by a cylindrical connecting piece (25) pushed onto the end of the pipe section, which connecting piece bears a threaded connection (26) and on which the sleeve (28) is mounted in a longitudinally-displaceable manner.

18. A hand-held spray gun according to any one of Claims 12 to 17, **characterised in that** part of the outer surface (32) of the sleeve (28) projects into the opening (12) in the housing (2) in the rotation-releasing position and is freely rotatable in the opening.

19. A hand-held spray gun according to any one of Claims 12 to 18, **characterised in that** rotation between the sleeve (28) and the pipe section (14) or the connecting piece (25) is prevented by a non-circular cross-section of the pipe section or the connecting piece (25) and a complementary inner surface of the sleeve (28).

20. A hand-held spray gun according to Claim 19, **characterised in that** the cross-section of the pipe section or the connecting piece (25) has the form of a polygon.

21. A hand-held spray gun according to any one of Claims 12 to 20, **characterised in that** the sleeve (28) has grip contouring (29, 30) on its exterior.

22. A hand-held spray gun according to any one of the preceding Claims, **characterised in that** the pipe section (14) is arranged in a tubular portion (9), of the housing (2), surrounding the pipe section (14) at a distance.

## Revendications

1. Pistolet de pulvérisation à main (1) pour un appareil de nettoyage à haute pression, comportant un boîtier (2) dans lequel débouche une conduite à liquide qui est montée mobile en rotation autour de son axe longitudinal dans le boîtier (2), la conduite à liquide comprenant un tronçon tubulaire (14) monté mobile en rotation autour de son axe longitudinal sur le boîtier (2), et ledit tronçon comprend à son extrémité libre une pièce de liaison (25) au moyen de laquelle une pièce de liaison adaptée d'une conduite formée d'un tuyau est reliée de façon détachable par rotation de la conduite de tuyau et du tronçon tubulaire (14) en sens inverse, **caractérisé en ce qu'**il est prévu des moyens anti-rotation (12 ; 28) agissant entre le boîtier (2) et le tronçon tubulaire (14), qui bloquent le tronçon tubulaire (14) dans le boîtier (2) à l'encontre d'une rotation autour de son axe longitudinal ou qui le libèrent au choix.

2. Pistolet de pulvérisation à main selon la revendication 1, **caractérisé en ce que** la pièce de liaison (25) du tronçon tubulaire (14) est agencée à l'extérieur du boîtier (2).

3. Pistolet de pulvérisation à main selon l'une ou l'autre des revendications 1 et 2, **caractérisé en ce que** la pièce de liaison du tronçon tubulaire (14) est un pas de vis (26).

4. Pistolet de pulvérisation à main selon l'une des revendications précédentes, **caractérisé en ce que** le tronçon tubulaire (14) est réalisé sous la forme d'un composant qui est enfichable dans le boîtier (2) et qui établit, dans la position enfichée, une liaison étanche librement mobile en rotation autour de l'axe longitudinal du tronçon tubulaire (14) avec un élément de conduite (4) successif de la conduite à liquide, et ledit composant est susceptible d'être fixé en direction axiale.

5. Pistolet de pulvérisation à main selon la revendication 4, **caractérisé en ce que** la liaison peut être établie par introduction d'un nipple (15) dans une douille (11, 16).

6. Pistolet de pulvérisation à main selon l'une ou l'autre des revendications 4 et 5, **caractérisé en ce que** la fixation axiale du tronçon tubulaire (14) s'effectue par une butée (22, 23) mobile sur le boîtier (2), laquelle engage par l'arrière une saillie (17, 18) sur le tronçon tubulaire (14) dans une position et qui le libère dans une autre position.

7. Pistolet de pulvérisation à main selon la revendication 6, **caractérisé en ce que** la butée est une anse en forme de U (22) qui est montée mobile en translation sur le boîtier (2) perpendiculairement à la direction longitudinale du tronçon tubulaire (14) et qui, dans l'état introduit, reçoit le tronçon tubulaire (14) entre ses branches (23).

8. Pistolet de pulvérisation à main selon l'une ou l'autre des revendications 6 et 7, **caractérisé en ce que** la saillie est formée par un épaulement annulaire (17) sur le tronçon tubulaire (14).

9. Pistolet de pulvérisation à main selon la revendication 8, **caractérisé en ce qu'**un palier à roulements (18) s'appuie contre l'épaulement annulaire (17), contre lequel s'appuie la butée (22, 23) susceptible d'être introduite.

10. Pistolet de pulvérisation à main selon l'une des revendications précédentes, **caractérisé en ce que** les moyens anti-rotation comprennent un élément de verrou (28) mobile en translation qui établit une coopération de formes entre le tronçon tubulaire (14) et le boîtier (2) dans la position bloquant une rotation.

11. Pistolet de pulvérisation à main selon la revendication 10, **caractérisé en ce que** l'élément de verrou (28) est monté mobile en translation sur le tronçon tubulaire (14).

12. Pistolet de pulvérisation à main selon la revendication 11, **caractérisé en ce que** l'élément de verrou est une douille (28) montée mobile en translation longitudinale et solidairement en rotation sur le tronçon tubulaire (14), laquelle plonge par une surface extérieure non circulaire (31) dans une ouverture complémentaire (12) du boîtier (2) dans la position bloquant une rotation.

13. Pistolet de pulvérisation à main selon la revendication 12, **caractérisé en ce que** la surface extérieure non circulaire (31) et l'ouverture complémentaire (12) du boîtier (2) présentent la forme d'un polygone.

14. Pistolet de pulvérisation à main selon l'une ou l'autre des revendications 12 et 13, **caractérisé en ce que** l'ouverture complémentaire (12) du boîtier (2) présente un diamètre qui permet l'introduction du tronçon tubulaire (14) dans le boîtier (2).

15. Pistolet de pulvérisation à main selon l'une des revendications 10 à 14, **caractérisé en ce que** pour établir la coopération de formes, des saillies en retrait (34, 35) par rapport à la paroi extérieure cylindrique (32) sont prévues dans la zone marginale la plus haute (33) de l'élément de verrou (28), dans lesquelles viennent plonger des saillies (37, 38) sur la paroi intérieure du boîtier (2).

16. Pistolet de pulvérisation à main selon la revendication 15, **caractérisé en ce que** les saillies (37) sont formées par des nervures de renforcement sur la paroi intérieure du boîtier (2).

17. Pistolet de pulvérisation à main selon l'une des revendications 12 à 16, **caractérisé en ce que** la pièce de liaison sur le tronçon tubulaire (14) est formée par une pièce de raccordement cylindrique (25) enfilée sur l'extrémité du tronçon tubulaire, qui porte un pas de vis de raccordement (26) et sur laquelle la douille (28) est montée mobile en translation longitudinale.

18. Pistolet de pulvérisation à main selon l'une des revendications 12 à 17, **caractérisé en ce que** dans la position libérant la rotation, la douille (28) plonge par une partie de sa surface extérieure (32) dans l'ouverture (12) du boîtier (2), partie qui est librement mobile en rotation dans l'ouverture.

19. Pistolet de pulvérisation à main selon l'une des revendications 12 à 18, **caractérisé en ce que** le blocage anti-rotation entre la douille (28) et le tronçon tubulaire (14) ou la pièce de raccordement (25) est obtenu par une section non circulaire du tronçon tubulaire ou de la pièce de raccordement (25) et par une surface intérieure complémentaire de la douille (28).

20. Pistolet de pulvérisation à main selon la revendication 19, **caractérisé en ce que** la section transversale du tronçon tubulaire ou de la pièce de raccordement (25) présente la forme d'un polygone.

21. Pistolet de pulvérisation à main selon l'une des revendications 12 à 20, **caractérisé en ce que** la douille (28) présente sur sa face extérieure un profilage de préhension (29, 30).

22. Pistolet de pulvérisation à main selon l'une des revendications précédentes, **caractérisé en ce que** le tronçon tubulaire (14) est agencé dans une partie tubulaire (9) du boîtier (2), laquelle l'entoure à distance.
